# EUROPEAN PATENT APPLICATION

(11) **EP 3 511 527 A2**
(43) Date of publication of application: **17.07.2019**
(21) Application number: 18211562.6
(22) Date of filing: 11.12.2018
(51) Int. Cl.: F01D 11/08, F01D 21/00, G01M 15/14

(54) **A TEST SPECIMEN FOR A GAS TURBINE ENGINE**

(30) Priority: 10.01.2018 GB 201800375
(71) Applicant: Rolls-Royce plc, London SW1E 6AT (GB)
(72) Inventor: Whittle, Michael, Derby, Derbyshire DE24 8BJ (GB)
(74) Representative: Rolls-Royce plc

(57) **Abstract**

A gas turbine engine, comprising: a component (220) having a gas path wall with a gas path facing surface (222) and an opposing air cooled surface, wherein the air cooled surface receives a supply of cooling air; a chamber which holds the cooling air for delivery to the air cooled surface; a test sample (232) mounted within the chamber so as to be located in the supply of cooling air which is delivered to the air cooled surface, wherein the test sample is constructed of the same material as the gas path wall of the component.

## Description

### Technical Field of Invention

This invention relates to a test specimen for a gas turbine engine. The test specimen may be mounted within an area of the gas turbine engine and used to determine the life of a component. The invention is particularly useful for ceramic matrix composite materials but may find application elsewhere.

### Background of Invention

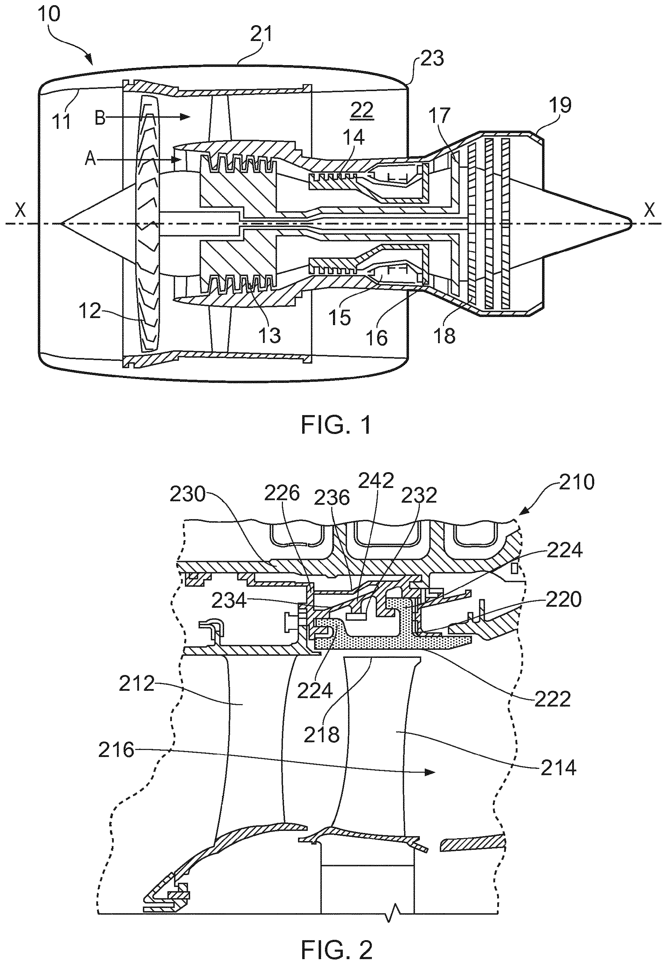

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The performance of gas turbine engines, whether measured in terms of efficiency or specific output, is improved by increasing the turbine gas temperature. It is therefore desirable to operate the turbines at the highest possible temperatures. For any engine cycle compression ratio or bypass ratio, increasing the turbine entry gas temperature produces more specific thrust (e.g. engine thrust per unit of air mass flow). However as turbine entry temperatures increase, the life of an un-cooled turbine falls, necessitating the development of better materials and the introduction of internal air cooling.

In current engines, the high-pressure turbine gas temperatures are hotter than the melting point of the available superalloys meaning significant amounts of cooling air is required to prevent failure and premature aging. An alternative technology which helps alleviate the need for cooling air is ceramic matrix composites, or CMCs as they are commonly known.

Generally, CMC materials consist of ceramic fibres embedded within a ceramic body. There are different materials available for the fibres and body. Two of the more promising materials for gas turbine engines are silicon carbide fibres within a body of silicon carbide, so-called SiC/SiC, and aluminium oxide fibres within an aluminium oxide body, which is referred to simply as an oxide CMC.

CMCs generally offer superior temperature and creep resistant properties for gas turbine engines and have a considerably lower density than their superalloy counterparts, making them ideal for aeroengines. Further, because they have a higher temperature tolerance, CMC materials require less cooling which acts to increase specific fuel consumption further.

Although CMC materials show promise as an alternative material, they are prone to oxidation and shortened life at temperatures experienced within the operating engine. This is compounded by the extent of the operational cycles the engines undergo in service which is often difficult to predict.

The present invention seeks to overcome some of the known difficulties of using CMC materials.

### Statements of Invention

According to an aspect there is provided a gas turbine engine, comprising: a component having a gas path wall with a gas path facing surface and an opposing air cooled surface, wherein the air cooled surface receives a supply of cooling air; a chamber which holds the cooling air for delivery to the air cooled surface; a test sample mounted within the chamber so as to be located in the supply of cooling air which is delivered to the air cooled surface, wherein the test sample is constructed of the same material as the gas path wall of the component.

The component may be made from a ceramic matrix composite material. The component may be a combustor component. The combustor component may be a combustor liner or panel. The component may be a high pressure turbine component. The high pressure turbine component may be an aerofoil, aerofoil platform or seal segment.

The chamber may be a conduit, duct, channel or other structure in which air is either stored or channelled prior to or at the point of delivery to the component.]

The test sample may be mounted on at least one attachment. There may be a first attachment and a second or further attachment. The test sample may be removably mounted to the at least one attachment.

The test sample may be held in a spaced relation to the air cooled surface.

The test sample may be an elongate member.

The gas turbine engine may comprise first and second attachments (242) which are distributed along a length of the test sample.

The first and second attachments (242) may be distributed along a longitudinal axis of the test sample. The first and second attachments (242) may be located towards respective first and second ends of the elongate test sample.

The at least one attachment may be a pedestal. The pedestals may be mounted to or extend from the air cooled surface. The pedestals may have a terminal end which is distal to the air cooled wall. The test sample may be mounted at or local to the terminal end.

The at least one attachment may include a receiving feature which snugly receives the test sample so as to provide an interference fit with the test sample.

The receiving feature may be an aperture, groove or notch. The attachment and/or receiving feature may include one or more retaining features which engages with the attachment and/or test sample so as to hold the test sample in situ. The retaining feature may include one or more clamps. The clamp may be provided by one or more push fit or threaded member.

The at least one attachment may slidably engage with the test sample to allow for differential movement in-service.

The at least one attachment may include a biasing member which urges the test sample to contact the attachment. The biasing member may include a resilient bias. The biasing member may be a spring. The resilient bias may form part of the retaining feature and/or receiving feature.

The wall may comprises a ceramic matrix composite material. The component may comprise a ceramic matrix component. The exterior surface may comprise a ceramic matrix composite material. The gas path surface may bound and define the main gas path of the gas turbine engine. The gas path surface may comprise a ceramic matrix composite material. The gas path surface may include one or more surface coatings.

The gas path wall may be made from a first material and the component further includes one or more parts made from a second material which is different to the first material. The second material may be metallic. The test sample may be mounted to one of the one or more parts made from the second material.

The gas turbine engine may include a turbine stage having a plurality of stator and rotor aerofoils, wherein the chamber is on an outboard side of the stator or rotor aerofoils.

The component may be either one of the plurality of stator or rotor aerofoils or a platform thereof, and the test sample is located on the radially outboard side of the stator or rotor aerofoils.

The component may be a turbine seal segment. The seal segment may include a seal segment carrier located between the gas path wall and engine casing to provide radial support for the gas path wall, wherein the test sample is located within the seal segment.

The seal segment may include a pair of radially extending supporting walls extending between the gas path wall and the engine casing to provide radial support for the gas path wall, wherein a lateral member extends between the radially extending supporting walls and the test sample is mounted to the lateral member or a one of the pair of radially extending supporting walls.

The lateral member may include a radially outwardly facing surface or radially inwardly facing surface and the test sample is mounted to one of the radially outwardly facing surface and radially inwardly facing surface.

The lateral member may extend diagonally between the two radial walls. The radial walls may or may not form part of the seal segment carrier. Lateral member may be a wall. The lateral member may include one or more apertures which provide a cooling path for cooling air to flow through. The radial walls may include one or more male/female attachments. The male female attachments may be so-called bird's mouth attachments.

The test sample may have a longitudinal axis which is circumferentially aligned with the seal segment. The test sample may be an elongate member. The test sample may be a strip. The elongate member may include a major axis and a minor axis. The major axis may be circumferentially aligned with respect to the engine. The elongate member may extend around the circumference of the engine.

The test sample has an uninstalled shape and an installed shape which may be different to the uninstalled shape. Mounting to the at least one attachment may deform the test sample. The deformation may be provided by a bending and/or twisting of the test sample. The deformation may be provided by a misalignment of a first and second attachment relative to the uninstalled shape. The test sample may engage with a first attachment prior to being deformed to engage with a second attachment.

The chamber may be fluidically coupled to a stage of the high pressure compressor.

The high pressure compressor may be one of a plurality of compressors. The high pressure compressor may be the highest pressure compressor of the plurality of compressors. The stage may be the final stage of the compressor. The cooling air chamber may provide a source of cooling air for cooling the component. The cooling air chamber and high pressure compressor may be fluidically coupled by one or more closed fluid pathways or conduits.

The cooling air chamber may be defined by an engine casing and the wall which defines the gas path of the component. The cooling air chamber may include a plurality of sub-chambers. The sub-chambers may be at similar or different pressures. The sub-chambers may be defined by an intermediate support structure which extends between the engine casing and the wall of the component. The wall may be the seal segment. The intermediate support structure may be a carrier.

The component may form part of a combustor. The component may be a combustor can, liner, tile or a combustor casing.

The gas turbine engine may include a plurality of test samples distributed around a principal axis of the gas turbine engine.

According to an aspect there is provided a method of determining the service life of a gas turbine component, comprising: providing, within a gas turbine engine, a component having a gas path wall with a gas path facing surface and an opposing air cooled surface, wherein the air cooled surface receives a supply of cooling air from a chamber within the gas turbine engine; mounting a test sample within the chamber so as to be located in the supply of cooling air which is delivered to the air cooled surface, wherein the test sample is constructed of the same material as the gas path wall of the component; removing the test sample and determining the degradation of the test sample.

Determining the degradation of the test sample may include determining the level of oxidation experienced by the test sample. The method may further comprise determining the level of degradation of the component on the basis of the oxidation of the test sample. The oxidation of the test sample may be corrected to allow for the different operating conditions experienced by the area in which the test sample is mounted and the exterior surface of the wall.

The method may further comprise: removing the test sample after a first period of operation; determining the degradation of the test sample; determining whether the component is suitable for a second period of operation on the basis of the degradation of the test sample; and, returning the gas turbine engine to service without replacing the component.

The method may further comprise: providing a plurality of test samples within the gas turbine engine; removing some of the plurality of test samples and retaining some of the plurality of test samples within the gas turbine engine for the second period of operation.

Within the scope of this application it is expressly envisaged that the various aspects, embodiments, examples and alternatives, and in particular the individual features thereof, set out in the preceding paragraphs, in the claims and/or in the following description and drawings, may be taken independently or in any combination. For example features described in connection with one embodiment are applicable to all embodiments, unless such features are incompatible.

### Description of Drawings

Embodiments of the invention will now be described with the aid of the following drawings of which:
Figure 1 shows a conventional gas turbine engine as described in relation to the background.
Figure 2 shows a streamwise section of a turbine section of gas turbine engine having a ceramic matrix composite seal segment.
Figure 3 shows a test sample which may be located within a gas turbine engine.
Figure 4 shows a streamwise section of a turbine section of gas turbine engine having a test sample mounted therein.
Figures 5 to 7 show details of test sample attachments which may be used to mount the test sample within a gas turbine engine.
Figure 8 shows an alternative test sample.
Figure 9 shows a transverse section of an axial combustor having a test sample mounted to an outer surface thereof.
Figure 10 shows an axially end on view of a test sample detailing the attachments to which the test sample is mounted.

### Detailed Description of Invention

Figure 2 shows a high pressure turbine section of the engine shown in Figure 1. Thus there is shown a nozzle guide vane 212 and turbine blade 214 in flow series having aerofoil sections within the main gas path 216. The turbine blade includes a tip 218 which is radially shrouded by a seal segment 220. The seal segment 220 bounds and defines the main gas path 216 on the outboard side of the turbine core. The seal segment 220 in the example shown is manufactured from a CMC material so as to provide some of the advantages outlined above.

The seal segment 220 includes a radially inboard gas path surface 222 and an opposing exterior/outboard surface. Radially extending supporting walls 224 project from the exterior surface towards the engine casing to which they append via an intermediate support structure in the form of a carrier structure 226. The walls 224 include forward facing hooks which mate with corresponding formations on the carrier 226. The carrier 226 is attached to the engine casing 230. Figure 2 shows a single seal segment 220 in streamwise section but it will be appreciated that this is one of many circumferentially arranged seal segments 220 configured to provide an annulus around the turbine rotor.

The nozzle guide vane 212 includes an aerofoil portion which extends in span between platforms which provide the radially inner and outer walls of the main gas path. The turbine rotor includes a disc (not shown) to which the blades 214 are peripherally mounted. The blades 214 include an aerofoil portion which extends from a platform which defines the radially inner gas path wall. The distal end of the aerofoil may terminate in a free end or include a full or partial shroud.

Any of the turbine components may include a ceramic matrix composite, CMC, material. CMC materials have higher temperature capability and lower density than conventional nickel alloys used in gas turbine engines. Under certain operating conditions, CMC materials may undergo oxidation which degrades the material and may lead to a reduction in strength. Such oxidation may occur at the temperatures experienced by the cooled outboard side of the high pressure turbine seal segment. This oxidation process may not occur at higher temperatures such as on the gas path surface of the seal segment 220.

One option to reduce the amount of oxidation is to include a surface coating on parts which may be exposed to the detrimental temperatures. However, this is an additional process step and cost which would ideally be omitted if possible.

Another way to address the oxidation is to predict the levels of oxidation using known engine and material data. However, the exposure of the components may differ according to the engine use and environment.

The present disclosure proposes the use of an embedded test sample within an operating engine in order to determine the level of degradation which may be experienced by in-service components. The test sample may be located in an environment which is representative of the component operating conditions. The exact location will be dependent on the conditions which need to be monitored. The test sample may be placed in a location which replicates the most harmful environment for the working component. This may be a cooled side of the component, rather than the main gas path side. Hence, for a high pressure turbine component, the test sample may be mounted to any structure which is subjected to the same cooling air flow as the CMC component in question. For example, the test sample may be mounted directly to or adjacent to a cooled side of the component. Alternatively, the test sample may be mounted in a cooling air chamber which receives substantially the same pressure and/or temperature cooling air as the air cooled component.

The specific location will be determined by a component which is being assessed and the room available for the test sample. In the case of an annular combustor, for example, the test sample may be located on the air cooled side of the radially outer or inner wall. In the case of a turbine, the test sample may be located local to a rotor or stator structure radially inwards of the inner gas path wall. Alternatively, or additionally, the test sample may be mounted on an upstream or downstream side of the component being assessed. The structure may be the same as the component being assessed, or may be a different component. The test sample may be placed in a cooling air supply duct which channels are to the air cooled surface of the component.

In the case of a turbine vane or rotor component, the test sample may be located within the seal segment structure. This structure generally defines an air chamber for delivery of cooling air to the seal segment and other areas. Suitable structures for mounting the test sample may include any of the engine casing, a support structure, a seal segment, an aerofoil cavity or platform.

The component which is to be assessed may be a combustor component or a turbine component amongst others. For example, the component may be a combustor liner or combustor casing. The turbine component may be a blade component, a vane component, or a seal segment. The blade or vane component may include an aerofoil or platform. The seal segment may include the carrier or seal segment portion which defines the main gas path.

In the example of Figure 2 there is shown a portion of a gas turbine engine, comprising: a component having a gas path wall with a gas path facing surface and an opposing air cooled surface, wherein the air cooled surface receives a supply of cooling air; a chamber which holds the cooling air for delivery to the air cooled surface; a test sample mounted within the chamber so as to be located in the supply of cooling air which is delivered to the air cooled surface, wherein the test sample is constructed of the same material as the gas path wall of the component.

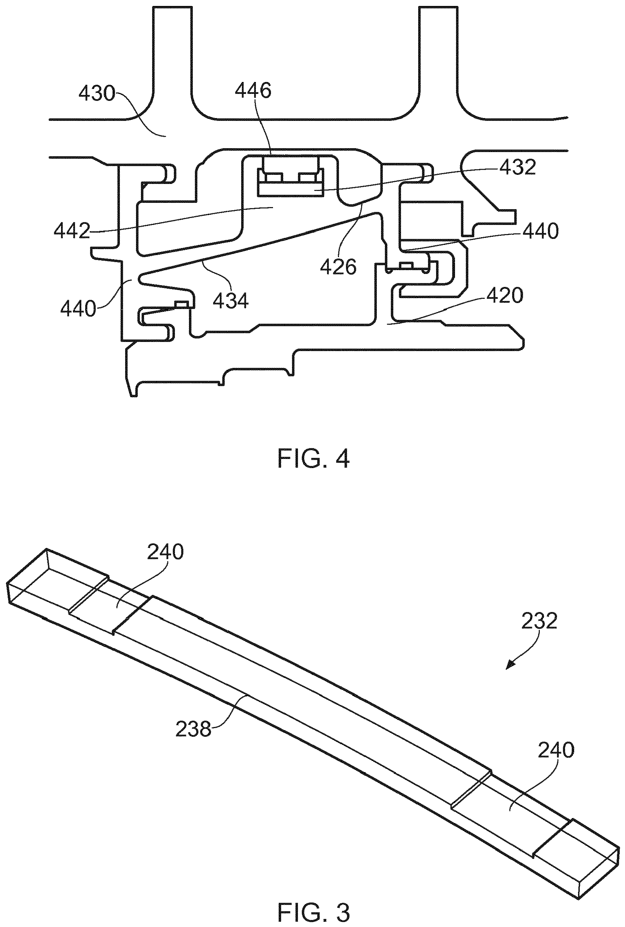

The test sample 232 is attached to the support structure in the form of a carrier 226. In Figure 2, the test sample 232 is located on an inboard facing surface. A similar arrangement is shown in Figure 4 in which the test sample 232 is located on an outboard facing surface.

The carrier 226 may include fore 224a and aft 224b radially extending support walls which provide the radial location of the seal segment 226. The fore 224a and aft 224b walls may be connected by a lateral member 234 which extends therebetween and provides the necessary strength for resolving the operational forces experienced by the component in service. The lateral member may extend circumferentially and/or axially and/or radially with respect to the principle axis and main gas path, and there may be more than one such lateral member 234.

In the example shown in Figure 2, there are first and second lateral members 234, 236. The first lateral member 234 extends axially and radially between the fore 224a and aft 224b walls. The second lateral member 236b extends predominantly axially between the fore 224a and aft 224b walls and includes an optional radial step. The first 234 and second 236 lateral members may partition the space on the radial outer of the gas path wall of the seal segment 220 into separate chambers with or without connecting fluid pathways, or may be perforated so as to allow free fluid flow therebetween. One or more of the chambers on the outboard side of the gas path wall may be fluidically connected to one of the engine compressors so as to receive a supply of cooling air therefrom. The cooling air may be utilised for the cooling of one or more of the turbine components.

The compressor which supplies the cooling air will be dependent on operational requirements. For the high pressure turbine this will typically be the high pressure compressor such that there is sufficient positive pressure to prevent ingress of the main gas path into the surrounding structures. The cooling air for the first stage of the high pressure turbine components may be provided by the final stage of the high pressure compressor.

The test sample 232 may be any size or shape to suit the desired requirements and the location in which it is to be placed. For example, the test sample 232 may need to be a particular shape and size to allow the necessary tests required to determine the amount of degradation. Alternatively or additionally, the test sample 232 may be sized to fit within an existing location which limits the size or shape of the sample. Further, the sample may be required to include one or more features, such as apertures, to allow a flow of cooling air therethrough. The test sample may also include features which can be used to fix the sample in place, either directly or in conjuction with one or more supports placed on the component to which the sample is mounted. The shape, size and configuration of the supports may be designed to avoid or at least reduce stress and deleterious vibration in the test sample 232.

Figure 3 shows one possible configuration of test sample 232 which is an elongate member in the form of a strip or plate having a length, a width and a relatively small thickness as shown. The test sample may be straight, flat, planar, curved or dished to match the curve of structure to which it is mounted or the component which it is mimicking. For example, where the structure is a seal segment, the test sample may be curved with a radius similar to the seal segment and/or the engine radius. The curvature of the test sample may be present when the sample is in a neutral or uninstalled position, or may be induced upon installation in the engine. For example, the test sample 232 may have a first, uninstalled shape, and a second, installed shape which is different to the uninstalled shape. For example, the shape of the test sample may be flat when uninstalled but curved upon installation. The induced change of shape may provide a resilient bias in order to assist with the retention of the test sample 232.

The test sample 232 may include ancillary features which aid the positioning and location of the test sample 232 within the engine. One or more faces of the test sample 232 may include ancillary features such as apertures, recesses or protrusions. The apertures, recesses or protrusions may engage with a corresponding attachment 232 or attachments of the gas turbine engine to provide a mount for the test sample. The attachment 232 may be provided by any suitable means. The attachment 232 may include one or more of a coupling, an interlock, clamp or interference fit which retains the test sample 232 in use. It will be appreciated that if the shape and stiffness of the test sample means that it will be excited by the engine vibrations then it must be supported in such a way to prevent excitation for example by supporting at multiple locations

As can be seen from Figure 3, a face surface 238 of the test sample 232 may include first and second recesses 240 towards the respective ends thereof. The recesses 240 may be provided by a reduction in thickness of the test sample 232. The recess 240 may be partial or full-width indentations within the surface of the sample and may be located within any of the faces or edges of the test sample 232.

The length of each recess 240 will be determined by the required engagement with the attachment. The recesses 240 may be different sizes relative to one another. Hence, the recesses 240 may have different surface areas, depths, orientations and aspect ratios. In the example shown, there is a first recess towards a first end of the sample 232, and a second recess towards a second end. One or more dimensions of the recesses 240 may vary relative to the other, such that they have different or common depths, lengths or widths. One reason for differing the dimensions would be to allow for differential movement, e.g. differential thermal expansion in service. Hence, one of the recesses 240 in Figure 4 is longer (relative to the length of the test sample 232) than the other. In use, the shorter recess 240 may be fixedly mounted to a structure whilst the longer recess 240 is configured, e.g. slidably engaged, to accommodate some relative elongation or contraction of the test sample 232. Hence, an attachment 242 which sits within the recess 240 can slide laterally along the test sample 232 to allow for thermal expansion in service.

The test sample 232 may be attached directly to the component, for example, the carrier 220 or casing 230, so as to be adjacent to and/or abut one or more surfaces of the component or an adjacent part, wall or component. In some examples, the surface of the component may include one or more of the attachments 242 to which the test sample 232 may be attached or which can be used to otherwise locate the test sample 232 within the engine.

The attachment(s) 242 may be provided by one or more protuberant features which extend from a surface of the component. One or more of the attachments 242 may be defined as up-stands, so-called pedestals, which extend from a surface of the component, or by a recess, for example, a trough, indent or general depression in the surface over which the test sample 232 is located to provide a separation. The pedestals and/or surface features which provide the attachments 242, may be cast into the component, machined therein, or fixed to the component by means of a fixing device such as a bolt or the like, as appropriate.

The test sample 232 may be located in a spaced relation to the surface of the component. The spaced relation may provide a separation between the test sample 232 and surface of the component. The separation may be present over a majority or large portion of the test sample 232. The separation may be sufficient to allow an air flow around the test sample 232 and/or between the test sample 232 and component. Thus, in some embodiments, the test sample 232 is spaced from or bounds the air cooled surface of the gas path wall by an amount suitable for channelling the cooling air therebetween.

The attachments 242 may be in the form of pedestals which extend from a first, attached end to a wall of the component to a second, free or distal end to which the test sample is attached. The wall may or may not be the air cooled surface of the gas path wall. An example of an attachment 242 can be seen in Figure 2 in which the first lateral member 234 includes one or more attachments 242 to which a test sample 232 may be mounted.

The component to which the test sample 232 is mounted may be a multipart component. Hence, the component may include one or more components assembled in the engine. The component may include blade shroud which includes a seal segment 220 and a carrier 226 housed within the engine casing 230. The seal segment 220 and carrier 226 may be preassembled to form a shroud cassette which is located in the turbine section of the engine during assembly. The component may comprise different materials. Thus, there may be parts made from a first material and parts made from a second material, in which the first and second materials are different. Some of the parts may be metallic. Some of the parts may be a ceramic such as a ceramic matrix composite.

Figure 4 shows a high pressure turbine seal segment 420 arrangement in which there is provided an engine casing 430, carrier 426 and seal segment 420. The carrier 426 may include radially extending support walls 440 which provide the radial location of the seal segment 426. The fore and aft walls 420 may be connected by a lateral member 434 which extends therebetween and provides the necessary strength for resolving the operational forces experienced by the component in service. The lateral member 434 may extend circumferentially and/or axially and/or radially with respect to the principle axis and main gas path, and there may be more than one such lateral member 434.

The turbine arrangement includes CMC nozzle guide vane aerofoil (not shown) located upstream of the turbine rotor (not shown). The seal segment 420 is located radially outside of the turbine rotor blade. The carrier provides an air chamber which holds cooling air which is provided to the air cooled surface, i.e. the interior surface, of the aerofoil component. This is because the cooling air used to cool the interior of the aerofoil is the same as that used to cool the seal segment 420. It will be appreciated that the air in the carrier may be metred so as to have different pressure which is better suited to the seal segment. Thus, the conditions and oxidation experienced by the cooled CMC component may be determined when placing the test sample 432 in a more convenient location. There may be a difference in the temperature and levels of oxidation experienced by the two components but this can be accounted for during the assessment of the test sample 432. In this or other examples, it may be the case that the test sample is located in an area known to represent the worst case scenario for a given engine architecture. Hence, an acceptable amount of degradation of the test sample would represent an acceptable amount of deterioration, degradation or wear on the other areas.

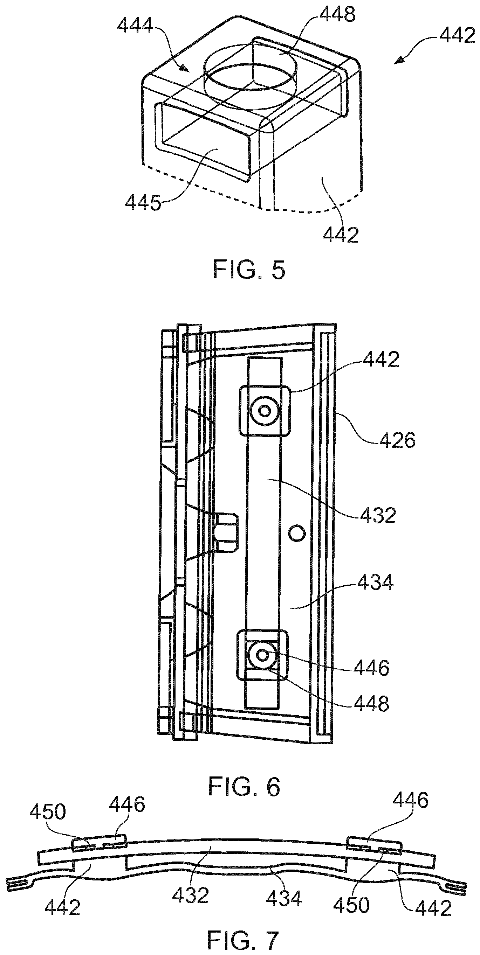

A typical attachment 442 can be seen in the longitudinal streamwise section of Figure 4, in the perspective view in Figure 5, in the radially inward plan view of Figure 6, and in transverse section (in the plane normal to the principal axis of the engine) of Figure 7. The attachment 442 is a pedestal in the form of a pillar or boss which extends from a surface of a carrier wall. The attachment 442 includes a proximal fixed end and a free distal end. Each attachment may include one or more receiving features with which the test sample engages to provide the retention. The retention feature 444 may include a seat portion which receives the test sample in use. The seat portion may be provided at a distance from the fixed end so as to be separated therefrom, thereby providing the spacing from the surface from which the retention feature 444 extends. The seat portion may be provided by a surface of a test sample aperture 445 which extends laterally through the pillar so as to provide a through-hole into which the test sample 432 may be slideably loaded. Alternatively, the retention feature 444 may be provided by, at least in part, any surface which forms part of a slot, groove, recess, clamp, blind aperture or other suitable formation in the attachment.

The retention feature 444 may have a shape which broadly corresponds to the sectional profile of the test sample 432 whilst providing any necessary clearance to allow for manufacturing tolerances and operational movement. In the example of Figure 5, the test sample aperture 445 is rectangular in transverse section and includes a base and opposing top face with side walls extending therebetween.

The location of the test sample 432 within aperture 445 may be achieved in various ways. One way may be to provide an interference fit between the test sample 432 and the walls fo the test sample aperture 445. Another method may be to use a retention part 446 which engages with the test sample 432 and the attachment feature 442 to locate it in position. The retention part may simply clamp the test sample in place, and/or provide a resilient bias, such as by using a spring loaded device, to urge the test sample 432 into a surface of the test sample aperture 445.

In the example of Figure 5, the test sample 432 is slidably loaded into the aperture 445 in the boss and a retention part 446 in the form of a pin is inserted into a through-hole 448 in the top wall of the attachment 432. The pin is press fit into the through-hole 448 and onto a surface of the test sample 432 to provide a clamp. Where the test sample includes a recess 240 such as that shown in Figure 3, the retention part 446 may be located within the recess to help prevent lateral movement once inserted. In this way, the test sample 432 does not need to be forcibly pinned down with the pin providing a stop to limit movement. The pin may be retained in the through-hole 448 using an interference fit or may include an optional weld.

It may be advantageous to stress the test sample 432 to increase the oxidation rate and/or to mimic the conditions experienced by the gas path component in use. One possible way to do this may be to clamp the test sample in place so that it cannot move relative to the component upon which it is installed. This may be achieved by clamping test sample 432 with the retention device 446 as described above. This may be done on a surface of the test sample, using the recesses 240 as described above in relation to Figure 3, or providing through-holes in the test sample 432. Such recesses 240 may be used to provide a lateral restraint. Thus, when the component part is heated, the differential thermal expansion between the test sample 432 and the component will result in differential movement and stressing of the test sample 432. Another option to achieve the stressing may be to load the test sample 432 by bending it during installation. This may be achieved by introducing a mounting point near the centre of the test sample 432 so that when the test sample 432 is installed, it will be subject to a 3-point bend to stress. Such a bending moment may also be used as part of the retention system.

The retention part 446 may include multiple separate components and may include a biasing member 450 to urge the test sample 432 onto the attachment. Figure 7 shows a transverse section of the carrier wall 434 normal to the principal axis of rotation as viewed axially downstream. The test sample 432 as shown here is curved with a radius centred on the principal axis of the gas turbine engine. There are the two pedestal attachments 442 which include pins 446 inserted into the holes in the attachments 442. The pins 446 include a body and a contact portion which is adjacent to or in contact with the test sample 432 when inserted. Also included is a resilient bias 450 in the form of a spring which is located between an underside of the pin and surface of the test sample 432. The spring may be in any suitable form such as a washer, disc spring or coil spring, for example. The resilient bias 450 may be installed so that a portion of the pin extends through a central bore of the spring thereby locating it. Each retention part 446 may include one or more resilient biases.

There may be one or more attachments 442 to hold a test sample 432. As shown in Figures 6 and 7, there may be two attachments 432 distributed along the length of the test sample, possibly provided towards the ends of the test sample.

The test sample 432 may be located so as to extend circumferentially around the engine. In the case of the seal segment, this will result in the test sample extending partially or fully between the circumferential edge surfaces of the seal segment. Further, there may be a plurality of test samples distributed throughout the engine. For example, there may be test samples arranged around rotor shroud. Each arcuate section of shroud may include a test sample 432, or a selection of the arcuate sections may include a test sample, the selected arcuate sections may be equally dispersed around the rotor shroud.

It will be appreciated that the seal segments, and many other circumferentially extending components of a gas turbine engine will be curved about the principal axis of the gas turbine engine to provide the necessary annular structure. The test sample may be curved in the circumferential direction or may be substantially straight. In the case of straight test sample the height of the attachments provide the clearance necessary to allow for the curvature of the component surface.

The test samples described herein may be used for engine development purposes to understand the behaviour of a material, or production engines to monitor the wear of parts in service. Multiple test samples may be included in one engine. These parts may be distributed circumferentially around the engine with a number sufficient to provide a suitable dataset for analysis. The engine may also incorporate one or more engine monitoring systems so that the engine conditions attributable to the oxidation of the part may be captured and used to further aid the analysis of the engine.

In use, there may be provided a method of determining the service life of a gas turbine component, comprising: providing, within a gas turbine engine, a component having a gas path wall with a gas path facing surface and an opposing air cooled surface, wherein the air cooled surface receives a supply of cooling air from a chamber within the gas turbine engine; mounting a test sample within the chamber so as to be located in the supply of cooling air which is delivered to the air cooled surface, wherein the test sample is constructed of the same material as the gas path wall of the component; removing the test sample and determining the degradation of the test sample.

Thus, the test samples are manufactured and installed in the engines as required. As per the above example of a seal segment, the test sample may be slid into the attachments from a circumferential end of the carrier prior to the pins and biasing means being inserted into the attachments. The pins are either inserted under force and/or welded into place prior to the seal segment being attached to the carrier to form the shroud cassette. The shroud cassette may then be inserted into the engine by axially engaging with the corresponding hooks on the engine casing.

The method may then further provide for removing the test sample after a first period of operation; determining the degradation of the test sample; determining whether the component is suitable for a second period of operation on the basis of the degradation of the test sample; and, returning the gas turbine engine to service without replacing the component.

Hence, after a period of operation, the engine may be stripped and the test samples removed. The test samples may then undergo testing as is known in the art to determine the level of oxidation and any other changes in condition. The tests may include nondestructive evaluation tests such as mass change, computed tomography scanning and scanning electron microscope analysis, including energy dispersive X-ray analysis to characterise the oxidation of the products.

These results may be used to determine the amount of deterioration of a component and also to verify material environmental exposure tests to verify if these tests provide a representative environment.

A destructive ultimate tensile fatigue or strength test may also be completed to understand the degradation in strength due to exposure to the engine environment. The test could be a flexural, tensile, inter-laminar or other strength assessment.

The approach described herein can be applied in engines with CMC components as a means to help quantify the remaining life of the CMC component. It may be advantageous to provide the CMC test sample from same CMC material as the CMC component and ideally manufactured in the same processing batch.

It may be advantageous to use the test samples in a production engine whilst in active service. The operating conditions endured by an engine during normal in-service operations and the resultant effects on an engine is difficult to predict using either test data or operating data taken from the engine. Hence, it may be advantageous to inspect a test sample at a service interval, say a first interval after a given operating time, and use the interrogation of the sample to determine whether i) parts need to be changed, or ii) whether they will be suitable for use until the next service interval.

Further, providing a plurality of test samples within the gas turbine engine allows some of the test samples to be removed whilst retaining some of the test samples within the gas turbine engine for the second period of operation. In this way, accumulative deterioration of the test samples and the associated components can be assessed. It will be appreciated that some of the test samples may be removed temporarily for some testing before being reloaded into the engine and thereby retained within the meaning of the disclosure.

Hence, the same or different test samples may be placed within the engine at a service interval, or a mixture of new and existing used around the engine.

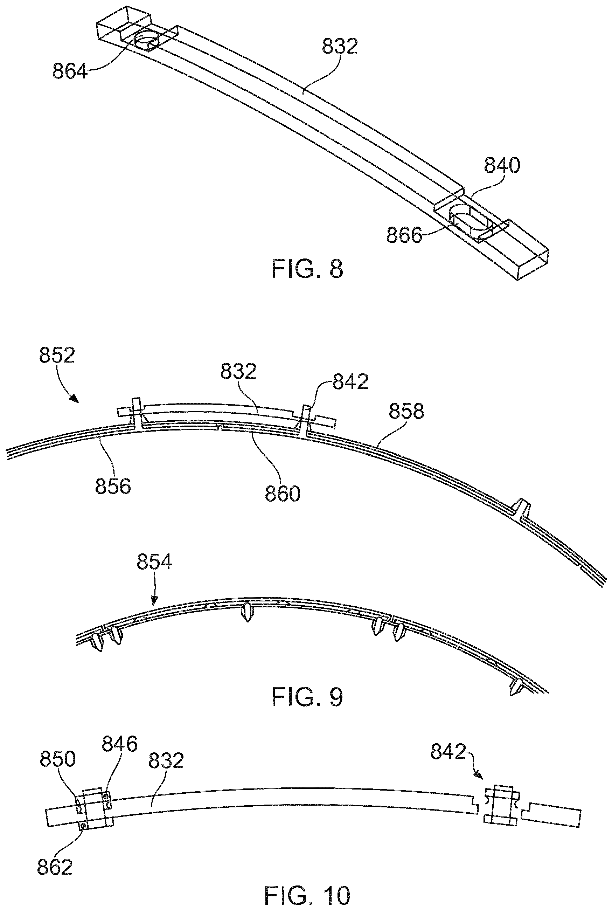

Figures 8, 9 and 10 show an example of a test sample 832 mounted on the exterior of a combustor 852. The combustor 852 is provided by an annulus having inner 854 and outer 856 annular walls defined a burn zone therebetween. As can be seen from Figure 1, the combustor extends axially in the engine with the inner 854 and outer 856 walls being radially separated. An upstream end of the combustor 852 includes circumferentially distributed injectors which add fuel to the axial flow of compressed air before being burnt, as is conventional in the field of gas turbine engines. The radially inner and outer spaces which surround the combustor walls 854, 856 receive high pressure air from the high pressure compressor which is free from fuel and is thus much cooler. Hence, the inboard and outboard regions around the combustors are in effect chambers which hold cooling air which is delivered to the air cooled surface of the combustor 852.

The combustor 852 may include a plurality of walls as is known in the art. The walls may be in the form of an external casing, one or more annular walls, or liners, as described above, and one or more tiles which are located within the combustor walls. The liners or tiles may be made of a ceramic matrix composite which has a main gas path facing surface which contains and defines the burn zone of the combustor, and an external air cooled surface which opposes the main gas path surface.

In the example shown in Figures 9 and 10, the combustor 852 includes a liner assembly in which each of the inner 854 and outer 856 liner walls have a metallic outer liner 858, and an inner CMC liner 860 which provides the gas path wall. The CMC liner may comprise a plurality of tiles mounted to the metallic liner. Suitable cooling channels are provided through the metallic liner 858 to provide cooling air to the air cooled side of the CMC tile or liner 860 where required.

The test sample 832 may be located in a cooling chamber 854 on the radially outboard or inboard side of the as most suitable/convenient. As with the seal segment example described above, the test sample 832 may be provided on attachments 842 in the form of studs which extend radially outwards from the metallic liner 858. The retention part may include one or more fixing means (not shown) which can engage with either or both of the test sample and the stud. The attachment may be employed to attach the inner liner or tile 860, to the metallic outer liner wall 858.

As best seen in Figure 10, the retention parts 846 are in the form of nuts which threadingly engage with the studs to clamp the test sample in place. As with the previous example, optional springs 850 may be included to provide a bias which urges the test sample 832 on to a surface or seat portion of the retention feature and to retain the test sample in place. The springs extend and engage the test sample 832, preventing relative movement under vibration but permitting the sliding between the test sample and the retention studs which is caused by the greater expansion of the metallic liner 858. This prevents inducing stress into the retaining studs. The retention feature may include an additional spacer 862 which separates the test sample and air cooled surface of the component 860. The spacer 862 may be a nut or bolt head which is used to affix the CMC liner to the metallic liner. The stud may be part of a bolt.

There may be significant thermal expansion mismatch between the metallic liner 858 and the CMC test sample 832. When heated there is a gap between the CMC surface and the retaining nut.

As can be seen from Figure 8, the test sample 832 may include one or more apertures 864, 866 to receive the retention parts. Thus, the studs or some other retention part may pass through the apertures to provide a fixture. The test sample 832 may include other locating features such as the aforementioned recesses 840 described in relation to Figure 3. The apertures 864, 866 and recesses 840 may be of similar or different sizes for the different attachments to account for in-service movement as described above. Thus, one of the retention part receiving apertures 866 may be an elongate aperture. The elongation may be aligned with the major axis of the test sample, particularly where the test sample 832 is elongate in itself.

It will be understood that the invention is not limited to the described examples and embodiments and various modifications and improvements can be made without departing from the concepts described herein and the scope of the claims. Except where mutually exclusive, any of the features may be employed separately or in combination with any other features in the disclosure extends to and includes all combinations and sub-combinations of one or more described features.

## Claims

1. A gas turbine engine, comprising:
a component having a gas path wall with a gas path facing surface (238) and an opposing air cooled surface, wherein the air cooled surface receives a supply of cooling air;
a chamber (854) which holds the cooling air for delivery to the air cooled surface;
a test sample (232) mounted within the chamber (854) so as to be located in the supply of cooling air which is delivered to the air cooled surface, wherein the test sample (232) is constructed of the same material as the gas path wall of the component.

2. A gas turbine engine as claimed in claim 1, wherein the test sample (232) is held in a spaced relation to the air cooled surface.

3. A gas turbine engine as claimed in claim 1 or claim 2, comprising first and second attachments (242) which are distributed along a length of the test sample (232).

4. A gas turbine engine as claimed in claim 3, wherein each attachment (242) includes a receiving feature which snugly receives the test sample (232) so as to provide an interference fit with the test sample (232).

5. A gas turbine engine as claimed in claim 3, wherein each attachment (242) slidably engages with the test sample (232) to allow for differential movement in-service.

6. A gas turbine engine as claimed in any preceding claim, wherein the wall comprises a ceramic matrix composite material.

7. A gas turbine engine as claimed in any preceding claim, wherein the gas path wall is made from a first material and the component further includes one or more parts made from a second material which is different to the first material.

8. A gas turbine engine as claimed in any preceding claim, wherein the component is either one of the plurality of stator or rotor aerofoils or a platform thereof, and the test sample (232) is located on the radially outboard side of the stator or rotor aerofoils.

9. A gas turbine engine as claimed any preceding claim, wherein the component is a turbine seal segment (220).

10. A gas turbine engine as claimed in claim 9, wherein the seal segment (220) includes a seal segment carrier (226) located between the gas path wall and engine casing to provide radial support for the gas path wall, wherein the test sample (232) is located within the seal segment (220).

11. A gas turbine engine as claimed in either of claims 9 or 10, wherein the seal segment (220) includes a pair of radially extending supporting walls extending between the gas path wall and the engine casing to provide radial support for the gas path wall, wherein a lateral member (234) extends between the radially extending supporting walls and the test sample (232) is mounted to the lateral member (234) or a one of the pair of radially extending supporting walls.

12. A gas turbine engine as claimed in any of claims 9 to 11, wherein the test sample (232) has a longitudinal axis which is circumferentially aligned with the seal segment (220).

13. A gas turbine engine as claimed in any of claims 1 to 7, wherein the component forms part of a combustor.

14. A method of determining the service life of a gas turbine component, comprising:
providing, within a gas turbine engine, a component having a gas path wall with a gas path facing surface and an opposing air cooled surface, wherein the air cooled surface receives a supply of cooling air from a chamber (854) within the gas turbine engine;
mounting a test sample (232) within the chamber (854) so as to be located in the supply of cooling air which is delivered to the air cooled surface, wherein the test sample (232) is constructed of the same material as the gas path wall of the component;
removing the test sample (232) and
determining the degradation of the test sample (232).

15. A method as claimed in claim 14, further comprising:
removing the test sample (232) after a first period of operation;
determining the degradation of the test sample (232);
determining whether the component is suitable for a second period of operation on the basis of the degradation of the test sample (232); and,
returning the gas turbine engine to service without replacing the component.
